# EUROPEAN PATENT APPLICATION

(11) **EP 1 431 341 A1**
(43) Date of publication of application: **23.06.2004**
(21) Application number: 02772914.4
(22) Date of filing: 25.09.2002
(51) Int. Cl.: C08L 27/06

(54) **VINYL CHLORIDE RESIN COMPOSITION**

(30) Priority: 28.09.2001 JP 2001303842
(71) Applicant: KANEKA CORPORATION, Osaka-shi, Osaka 530-8288 (JP)
(72) Inventor: NAKAJIMA, Nobumasa, Miyakojima-ku, Osaka-shi, Osaka 534-0027 (JP); YUI, Koji, Nishi-ku, Kobe-shi, Hyogo 651-2113 (JP); HONGO, Shinya, Akashi-shi, Hyogo 673-0018 (JP); KADOKURA, Mamoru, Himeji-shi, Hyogo 671-1242 (JP)
(74) Representative: VOSSIUS & PARTNER
(86) International application number: PCT/JP2002/009900
(87) International publication number: WO 2003/029348

(57) **Abstract**

A vinyl chloride resin composition having excellent weatherability and impact resistance is provided. The vinyl chloride resin composition comprises (A) 2 to 30 parts by weight of a graft copolymer and (B) 100 parts by weight of a vinyl chloride resin, wherein the graft copolymer (A) is obtained by polymerizing, in the presence of 70 to 95 parts by weight of a crosslinked acrylic rubber polymer (a-1) comprising 81 to 95 % by weight of butyl acrylate, 4 to 18 % by weight of an alkyl acrylate having a C₈-₁₂ alkyl group and 0.2 to 0.8 % by weight of a multi-functional monomer, 5 to 30 parts by weight of a monomer component for graft polymerization (a-2) comprising 92 to 100 % by weight of methyl methacrylate, and 0 to 8 % by weight of an alkyl methacrylate having a C₂-₈ alkyl group, an alkyl acrylate having a C₁-₈ alkyl group, an unsaturated nitrile compound or an aromatic vinyl compound, wherein the total amount of the crosslinked acrylic rubber polymer (a-1) and the monomer component for graft polymerization (a-2) is 100 parts by weight.

## Description

### TECHNICAL FIELD

The present invention relates to a vinyl chloride resin composition having particularly excellent impact resistance and weatherability.

### BACKGROUND ART

Molded articles of vinyl chloride resin are used in various industrial fields because they are inexpensive and have good mechanical and chemical properties. However, such molded articles have a problem that their impact resistance at normal or low temperature is inferior.

Thus, a lot of methods have been proposed to overcome the problems of inferior impact resistance. For example, MBS resin obtained by graft polymerization of butadiene rubber polymer with methyl methacrylate and styrene, and ABS resin obtained by graft polymerization of butadiene rubber polymer with acrylonitrile and styrene are now widely used.

However, when MBS resin or ABS resin is mixed to a vinyl chloride resin, the impact resistance is improved but weatherability becomes inferior and there arises a problem that the impact resistance is remarkably decreased when molded articles are used outside. Under such circumstances, it is proposed to graft-polymerize methyl methacrylate, an aromatic vinyl compound or a unsaturated nitrile compound with rubber polymer comprising alkyl acrylate which contains no double bond in order to improve weatherability of MBS resin with imparting impact resistance (JP-B-51-28117 and JP-B-57-8827).

In case of graft copolymers prepared by the above methods, molded articles of the vinyl chloride resin composition obtained therefrom has excellent weatherbility, and thus can be used as window frames or sizing materials in the construction and building industries where long-lasting weatherability is required.

However, impact resistance at low temperature, for example, below 0°C, of such molded articles of the vinyl chloride resin composition containing the above graft copolymers is insufficient compared with that of the vinyl chloride resin composition containing MBS resin. In order to achieve sufficient impact resistance, the above relatively expensive graft copolymer must be used in a large amount, which leads to increase in the costs of producing molded articles, and there arises a problem such that tensile strength, molding temperature and other physical properties of the molded articles are decreased.

In view of the above conventional arts, the present invention provides a vinyl chloride resin composition which has excellent impact resistance particularly at low temperature without decreasing weatherability.

### DISCLOSURE OF INVENTION

It has been found that the above problem can be solved by using a graft copolymer comprising a crosslinked acrylic rubber polymer containing butyl acrylate and a higher alkyl acrylate as main components in a particular ratio, and the present invention has been completed.

That is, the present invention relates to a vinyl chloride resin composition comprising (A) 2 to 30 parts by weight of a graft copolymer and (B) 100 parts by weight of a vinyl chloride resin, wherein the graft copolymer (A) is obtained by polymerizing, in the presence of 70 to 95 parts by weight of a crosslinked acrylic rubber polymer (a-1) comprising 81 to 95 % by weight of butyl acrylate, 4 to 18 % by weight of an alkyl acrylate having a C₈-₁₂ alkyl group and 0.2 to 0.8 % by weight of a multi-functional monomer, 5 to 30 parts by weight of a monomer component for graft polymerization (a-2) comprising 92 to 100 % by weight of methyl methacrylate, and 0 to 8 % by weight of an alkyl methacrylate having a C₂-₈ alkyl group, an alkyl acrylate having a C₁-₈ alkyl group, an unsaturated nitrile compound or an aromatic vinyl compound, wherein the total amount of the crosslinked acrylic rubber polymer (a-1) and the monomer component for graft polymerization (a-2) is 100 parts by weight.

It is preferable that the crosslinked acrylic rubber polymer (a-1) contains 81 to 92 % by weight of butyl acrylate and 7 to 18 % by weight of the alkyl acrylate having a C₈-₁₂ alkyl group.

Preferably, the alkyl acrylate contained in the crosslinked acrylic rubber polymer (a-1), having a C₈-₁₂ alkyl group is 2-ethylhexyl acrylate.

It is preferable that the graft copolymer (A) comprises 80 to 95 parts by weight of the crosslinked acrylic rubber polymer (a-1) and 5 to 20 parts by weight of the monomer component for graft polymerization (a-2).

It is preferable that the graft copolymer (A) comprises 85 to 92 parts by weight of the crosslinked acrylic rubber polymer (a-1) and 8 to 15 parts by weight of the monomer component for graft polymerization (a-2).

It is preferable that 0.4 to 0.6 % by weight of the multi-functional monomer is contained in the crosslinked acrylic rubber polymer (a-1).

The present invention also relates to a molded article comprising the vinyl chloride resin composition.

### BEST MODE FOR CARRYING OUT THE INVENTION

The vinyl chloride resin composition of the present invention comprises (A) 2 to 30 parts by weight of a graft copolymer and (B) 100 parts by weight of a vinyl chloride resin, wherein the graft copolymer (A) is obtained by polymerizing, in the presence of 70 to 95 parts by weight of a crosslinked acrylic rubber polymer (a-1) comprising 81 to 95 % by weight of butyl acrylate, 4 to 18 % by weight of an alkyl acrylate having a C₈-₁₂ alkyl group and 0.2 to 0.8 % by weight of a multi-functional monomer, 5 to 30 parts by weight of a monomer component for graft polymerization (a-2) comprising 92 to 100 % by weight of methyl methacrylate, and 0 to 8 % by weight of an alkyl methacrylate having a C₂-₈ alkyl group, an alkyl acrylate having a C₁-₈ alkyl group, an unsaturated nitrile compound or an aromatic vinyl compound, wherein the total amount of the crosslinked acrylic rubber polymer (a-1) and the monomer component for graft polymerization (a-2) is 100 parts by weight.

The graft copolymer (A) of the present invention is obtained by polymerizing the monomer component for graft polymerization (a-2) in the presence of the crosslinked acrylic rubber polymer (a-1).

The crosslinked acrylic rubber polymer (a-1) is prepared by polymerization reaction of butyl acrylate, an alkyl acrylate having a C₈-12 alkyl group and a multi-functional monomer.

The amount of butyl acrylate is 81 to 95 % by weight, preferably 81 to 92 % by weight based on the crosslinked acrylic rubber polymer (a-1). When the amount of butyl acrylate is less than 81 % by weight or more than 95 % by weight, sufficient impact resistance cannot be achieved.

The amount of the alkyl acrylate having a C₈-₁₂ alkyl group is 4 to 18 % by weight, preferably 7 to 18 % by weight based on the crosslinked acrylic rubber polymer (a-1). When the amount of the alkyl acrylate is less than 4 % by weight or more than 18 % by weight, sufficient impact resistance cannot be achieved.

The amount of the multi-functional monomer is 0.2 to 0.8 % by weight, preferably 0.4 to 0.6 % by weight based on the crosslinked acrylic rubber polymer (a-1). When the amount of the multi-functional monomer is less than 0.2 % by weight or more than 0.8 % by weight, sufficient impact resistance cannot be achieved.

The alkyl acrylate having a C₈-₁₂ alkyl group is a component used for preparing a rubber component having excellent weatherability and improved impact resistance. When the number of the carbon atoms of the alkyl group is less than 8, the glass transition temperature of the rubber component becomes high and the impact resistance of molded articles cannot be exhibited easily. When the number of the carbon atoms of the alkyl group is more than 12, polymerizability becomes inferior. Concrete examples of alkyl acrylate having a C₈-₁₂ alkyl group include 2-ethylhexyl acrylate and n-octyl acrylate. Among them, 2-ethylhexyl acrylate and n-octyl acrylate are preferable from the viewpoint that glass transition temperature of the rubber component becomes low and impact resistance of molded articles can be exhibited easily.

The multi-functional monomer is a component used as a crosslinking agent. Typical examples thereof include aromatic multi-functional vinyl compounds such as divinylbenzene; polyhydric alcohol dimethacrylate such as polyethyleneglycol dimethacrylate and 1,3-butanediol dimethacylate; allyl esters of unsaturated carboxylic acid such as allyl methacrylate and allyl acrylate; and diallyl or triallyl compounds such as diallyl phthalate and triallyl cyanurate. Among them, compounds in which at least one functional group has different reactivity from other functional groups are preferable from the viewpoint that a crosslinked rubber copolymer can be obtained from a small amount of such multifunctional monomers. Preferable examples are allyl methacrylate and diallyl phthalate.

There is no particular limit for the preparation method of the crosslinked acrylic rubber polymer (a-1), and usual polymerization methods such as emulsion polymerization, bulk polymerization and solution polymerization can be used.

In preparing the crosslinked acrylic rubber polymer (a-1), the addition and polymerization of monomer components, i.e., butyl acrylate, alkyl acrylate having a C₈-₁₂ alkyl group and multi-functional monomer, may be carried out in one step or a plurality of steps without particular limitation. That is, the above monomer components may be added in a lump or continuously after mixing the components previously. Alternatively, more than one step may be provided so that one component or at least two components are added in combination at each step.

Examples of polymerization initiator used for the polymerization of the crosslinked acrylic rubber polymer (a-1) are organic peroxides including ketone peroxides or aldehyde peroxides such as cyclohexanone peroxide, diacyl peroxides such as acetyl peroxide, hydroperoxides such as t-butyl hydroperoxide and cumene hydroperoxide, dialkyl peroxides such as di-t-butyl peroxide, alkyl peresters such as t-butyl peroxyisobutylate, peroxy carbonates such as t-butyl peroxy isopropyl carbonate; inorganic peroxides such as hydrogen peroxide and potassium persulfate; and azo compounds such as 2,2'-azobisisobutylonitrile. However, the polymerization initiator is not limited thereto. Among them, an organic peroxide and/or an inorganic peroxide may be used to carry out thermal decomposition polymerization, or those initiators may be used together with a reducing agent such as sodium ascorbate or formaldehyde sodium sulfoxylate, a co-catalyst such as ferrous sulfate or a chelating agent such as ethylene diamine tetraacetate to carry out redox polymerization, if necessary.

The kind of surfactant used in the emulsion polymerization is not particularly limited. The surfactant includes anionic surfactant, nonionic surfactant and cationic surfactant. In addition, combination use of anionic surfactant and nonionic surfactant, and combination use of cationic surfactant and nonionic surfactant are also possible.

Examples of anionic surfactant are not particularly limited and include alkali metal salts of fatty acids, such as potassium palmitate, sodium oleate and sodium stearate; alkali metal salts or amines, or ammonium salts of fatty alcohol sulfate such as sodium dodecylsulfate, triethanol amine dodecylsulfate and ammonium dodecylsulfate; alkali metal salts of alkylbenzenesulfonic acid or alkylnaphthalenesulfonic acid such as sodium dodecylbenzenesulfonate and sodium dodecylnaphthalenesulfonate; alkali metal salts such as sodium naphthalenesulfonates and formaldehyde polycondensation; alkali metal salts such as sodium dialkylsulfosuccinate; alkyl phosphates such as alkyl phosphate; and polyoxyethylene sulfates such as sodium polyoxyethylene alkyl ether sulfate and sodium polyoxyethylene alkyl phenyl ether sulfate.

Examples of nonionic surfactant are not particularly limited and include polyoxyethylene alkyl ethers such as polyoxyethylene dodecyl ether and polyoxyethylene stearyl ether; polyoxyethylene alkyl phenyl ethers such as polyoxyethylene nonyl phenyl ether; sorbitan esters of fatty acids such as sorbitan monostearate, sorbitan distearate and sorbitan cescheolate; polyoxyethylene sorbitan fatty acid esters such as polyoxyethylene sorbitan monostearate; polyoxyethylene acyl esters such as polyethylene glycol monostearate and polyethylene glycol distearate; a polyoxyethylene-polyoxypropylene block copolymer (molecular weight: about 2,000 to 10,000) and glycerol esters of fatty acids such as glyceryl monooleate.

Examples of cationic surfactant are not particularly limited and include alkyl amine salts such as dodecylamine acetate; quaternary ammonium salts such as dodecyl trimethyl ammonium chloride; and polyoxyethylene alkyl amine. In addition to these surfactants, high molecular surface active agents are also available.

The graft copolymer (A) of the present invention is obtained by polymerizing the monomer component for graft polymerization (a-2) in the presence of the crosslinked acrylic rubber polymer (a-1).

The amount of the crosslinked acrylic rubber polymer (a-1) is 70 to 95 parts by weight, preferably 80 to 95 parts by weight and more preferably 85 to 92 parts by weight in a total of 100 parts by weight of (a-1) and (a-2). When the amount of crosslinked acrylic rubber polymer is less than 70 parts by weight or more than 95 parts by weight, the improving effect on impact resistance of molded articles prepared from the vinyl chloride resin composition is inferior.

The amount of the monomer component for graft polymerization (a-2) is 5 to 30 parts by weight, preferably 5 to 20 parts by weight, and more preferably 8 to 15 parts by weight (herein, the total amount of the crosslinked acrylic rubber polymer (a-1) and the monomer component for graft polymerization (a-2) is 100 parts by weight). When the amount of the monomer component for graft polymerization (a-2) is less than 5 parts by weight, dispersibility of the graft copolymer (A) in the molded article of the vinyl chloride resin composition is lowered. When the amount of the monomer component for graft polymerization (a-2) is more than 30 parts by weight, the amount of the crosslinked acrylic rubber polymer (a-1) is relatively increased and improving effect on the impact resistance is decreased.

In case of emulsion polymerization, average particle diameter of the crosslinked acrylic rubber polymer (a-1) is preferably 0.03 to 0.5 µm, more preferably 0.08 to 0.3 µm, and most preferably 0.15 to 0.18 µm. When the average particle diameter is less than 0.03 µm or more than 0.5 µm, improving effect on the impact resistance is decreased.

The monomer component for graft polymerization (a-2) comprises methyl methacrylate, alkyl methacrylate having a C₂-₈ alkyl group, alkyl acrylate having a C₁-₈ alkyl group, an unsaturated nitrile compound or aromatic vinyl compound. The alkyl methacrylate having a C₂-₈ alkyl group, the alkyl acrylate having a C₁-₈ alkyl group, the unsaturated nitrile compound or the aromatic vinyl compound may be used alone or in combination of two or more. When the number of the carbon atoms of the alkyl group of the alkyl methacrylate is more than 8, the graft copolymer (A) is softened and therefore it becomes difficult to separate the copolymer in the form of powder.

Concrete examples of alkyl methacrylate having a C₂-₈ alkyl group are ethyl methacrylate and butyl methacrylate, but not limited thereto. These alkyl methacrylates may be used alone or in combination of two or more.

When the number of the carbon atoms of the alkyl group of the alkyl acrylate is more than 8, the graft copolymer (A) is softened and therefore it becomes difficult to separate the copolymer in the form of powder.

Concrete examples of alkyl acrylate having a C₁-₈ alkyl group are ethyl acrylate, butyl acrylate and 2-ethylhexyl acrylate, but not limited thereto. These alkyl acrylates may be used alone or in combination of two or more.

Concrete examples of unsaturated nitrile compounds are acrylonitrile and methacrylonitrile, but not limited thereto. These unsaturated nitrile compounds may be used alone or in combination of two or more.

Concrete examples of aromatic vinyl compound are styrene, α-methylstyrene, 1-vinylnaphthalene and 2-vinylnaphthalene, but not limited thereto. These aromatic vinyl compounds may be used alone or in combination of two or more.

The amount of methyl methacrylate contained in the monomer component for graft polymerization (a-2) is 92 to 100 % by weight, and the amount of alkyl methacrylate having a C₂-₈ alkyl group, alkyl acrylate having a C₁-₈ alkyl group, unsaturated nitrile compound or aromatic vinyl compound is 0 to 8 % by weight. When the amount of methyl methacrylate is less than 92 % by weight, the graft copolymer (A) is softened and therefore it becomes difficult to separate the copolymer in the form of powder.

In graft polymerization, all ingredients of the monomer component for graft polymerization (a-2) may be added at one time, or part or all of the ingredients of the monomer component for graft polymerization (a-2) may be added continuously or intermittently. Alternatively, the ingredients of the monomer component for graft polymerization may be mixed before use, or graft polymerization may be carried out in a plurality of steps with making different compositions for each step within the acceptable range.

When the graft copolymer (A) latex is prepared by emulsion polymerization, the latex is separated with salt or acid, filtered, washed and dried or spray-dried to obtain solid particles. An antioxidant or ultraviolet ray absorbing agent usually used before separating with salt or acid may be added.

The vinyl chloride resin composition of the present invention comprises 2 to 30 parts by weight of the graft copolymer (A) and 100 parts by weight of the vinyl chloride resin (B). Preferably, the amount of the graft copolymer (A) is 3 to 15 parts by weight. When the amount of the graft copolymer (A) is less than 2 parts by weight, improving effect on impact resistance of the molded article is not achieved. When the amount of the graft copolymer (A) is more than 30 parts by weight, heat resistance of molded articles is decreased.

The vinyl chloride resin (B) used in the present invention may be a vinyl chloride homopolymer or a copolymer comprising at least 70 % by weight of vinyl chloride monomer and at most 30 % by weight of other monomers copolymerizable with the vinyl chloride monomer. Examples of other monomers are vinyl acetate, vinyl propionate, vinyl butylate, vinyl benzoate, acrylic acid, mathacrylic acid, methyl acrylate, ethyl acrylate, methyl methacrylate, ethyl methacrylate, methacrylic amide and other copolymerizable mono-olefin monomers. The other copolymerizable monomers may be used alone or in combination of two or more.

The vinyl chloride resin composition of the present invention may be further incorporated with a chlorinated polyethylene or polybutadiene impact modifier. In addition, processing aid may be added to improve processability, and a methyl methacrylate polymer may also be added, if necessary.

The vinyl chloride resin composition of the present invention may be prepared by blending the above materials in the same manner as preparing a common vinyl chloride resin, and there is no particular limitation for the preparation method. In blending materials, known additives generally used for preparing vinyl chloride resin composition, such as a stabilizer, lubricant, plasticizer, colorant, filler, ultraviolet ray absorber, light resistance stabilizer and flame retardant may be added if necessary.

Examples of stabilizer include lead stabilizers such as tribasic lead sulfate, dibasic lead phosphite, basic lead sulfite, dibasic lead phthalate, lead white and lead silicate; tin stabilizers such as butyl tin maleate, octyl tin maleate, dibutyltin dimaleate, di-n-alkyl tin mercaptide, dibutyl tin lauryl mercaptide and dioctyl tin S,S'-bis-(iso-octyl mercapto acetate; metal soap stabilizers derived from a metal such as potassium, calcium, magnesium, barium, zinc, cadmium or lead and a fatty acid such as 2-ethyl hexanoic acid, lauric acid, stearic acid, isostearic acid, hydroxy stearic acid, oleic acid, recinoleic acid, linoleic acid or behenic acid; composite metal soap stabilizer such as Ba-Ca, Ca-Zn, Ba-Ca, Ca-Mg-Sn, Ca-Zn-Sn, Pb-Sn and Pb-Ba-Ca stabilizers; and epoxidized oil stabilizers such as epoxidized soybean oil and epoxidized linseed oil. These stabilizers may be used alone or in combination of two or more.

The vinyl chloride resin composition of the present invention can be molded into molded articles by extrusion molding, calendering molding, blow forming and injection molding in accordance with the intended use.

In the followings, the present invention is explained in detail by means of examples, but these are mere examples and the invention is not limited thereto. "Part(s)" and "%" mean "part(s) by weight" and "% by weight", respectively, unless otherwise specified. Abbreviations in Examples, Comparative Examples and Tables represent the following compounds:
MMA: methyl methacrylate
BA: n-butyl acrylate
AMA: allyl methacrylate
2-EHA: 2-ethyl hexyl acrylate

Evaluations in Examples and Comparative Examples were carried out in accordance with the evaluation method described in (2) below.

### EXAMPLE 1

### (1) Preparing graft copolymer (A)

A glass reactor equipped with a thermometer, an agitator, a reflux condenser, a nitrogen inlet and a feeder for monomer and emulsifier was charged with 200 parts of distilled water and 0.05 part of sodium dodecyl sulfate. With agitating under nitrogen stream, the temperature of the aqueous solution was increased to 50°C. In the next place, a mixture of 7.61 parts of BA, 0.85 part of 2-EHA, 0.04 part of AMA and 0.01 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 68.51 parts of BA, 7.61 parts of 2-EHA, 0.38 part of AMA and 0.1 part of cumene hydroperoxide over 4 hours. Simultaneously, a 5 % aqueous solution which contains 1 part of sodium dodecyl sulfate was continuously added over 4 hours. When the addition of monomers was completed, agitation was continued for 1.5 hours, and a crosslinked acrylic rubber polymer (a-1) having an average particle size of 0.16 µm was obtained in a conversion ratio of 99.8 %. Then, a small amount of the crosslinked acrylic rubber polymer (a-1) was coagulated by salting out with an aqueous solution of calcium chloride and dried. The obtained solid substance was subjected to extraction by using toluene at 23°C for 40 hours, and gel content was measured to be 98.2 %. To the crosslinked acrylic rubber polymer (a-1) was continuously added a mixture of 13.8 parts of MMA, 1.2 parts of BA and 0.01 part of cumene hydroperoxide as the monomer component for graft polymerization (a-2) over an hour at 50°C. After the addition, 0.01 part of cumene hydroperoxide was added and agitation was further continued for two hours to complete the polymerization. The conversion ratio of the monomer component for graft polymerization was 98.3 %. The obtained graft copolymer latex was coagulated by salting out with an aqueous solution of calcium chloride, heat-treated, dehydrated and dried to prepare a white resin powder.

### (2) Preparing vinyl chloride resin composition and molded article, and evaluation of molded article

A powder compound was obtained by blending, by a Henschel mixer, 100 parts of a vinyl chloride resin (Kanevinyl S-1001 available from Kaneka Corporation; average polymerization degree: 1,000), 4.5 parts of a lead one pack stabilizer (LGC3203 available from ACROS Co. Ltd.), 4.5 parts of titanium oxide, 8 parts of calcium carbonate, 0.5 part of processing aid (methyl methacrylate polymer such that a specific viscosity at 30°C is less than 0.5 when 0.1 g of the polymer is dissolved in chloroform solution; Kaneace PA-20 available from Kaneka Corporation) and 7 parts of the graft copolymer (A). A profile extrusion molded article for window frame was then produced according to the following molding conditions.
Molding machine: 65-mm twin-screw extruder made by Battenfeld Extrusionstechnik GmbH.
Molding temperature: C1/ C2/ C3/ C4/ AD/ D1/ D2/ D3/ D4/ D5: 175/ 180/ 180/ 175/ 185/ 202/ 202/ 206/ 202/ 200 (°C)
Number of revolutions: 24 rpm
Discharge: 110 kg/ hour

A sample was prepared from the obtained profile extrusion molded article and Charpy impact value of the sample was measured according to JIS K 7111.

Results are shown in Table 1.

### EXAMPLE 2

A glass reactor equipped with a thermometer, an agitator, a reflux condenser, a nitrogen inlet and a feeder for monomer and emulsifier was charged with 200 parts of distilled water and 0.05 part of sodium dodecyl sulfate. With agitating under nitrogen stream, the temperature of the aqueous solution was increased to 50°C. In the next place, a mixture of 7.19 parts of BA, 1.27 parts of 2-EHA, 0.04 part of AMA and 0.01 part of cumene hydroperoxide was added. After 10 minutes, a solution obtained by dissolving 0.2 part of formaldehyde sodiumsulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 64.70 parts of BA, 11.42 parts of 2-EHA, 0.38 part of AMA and 0.1 part of cumene hydroperoxide over 4 hours. Simultaneously, a 5 % aqueous solution which contains 1 part of sodium dodecyl sulfate was continuously added over 4 hours. A crosslinked acrylic rubber polymer (a-1) having an average particle size of 0.16 µm was obtained. A white resin powder was obtained and molded article was prepared therefrom to measure the impact resistance in the same manner as in Example 1 except for using the above crosslinked acrylic rubber polymer. Results are shown in Table 1.

### EXAMPLE 3

A glass reactor equipped with a thermometer, an agitator, a reflux condenser, a nitrogen inlet and a feeder for monomer and emulsifier was charged with 200 parts of distilled water and 0.05 part of sodium dodecyl sulfate. With agitating under nitrogen stream, the temperature of the aqueous solution was increased to 50°C. In the next place, a mixture of 8.46 parts of 2-EHA, 0.04 part of AMA and 0.01 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 76.12 parts of BA, 0.38 part of AMA and 0.1 part of cumene hydroperoxide over 4 hours. Simultaneously, a 5 % aqueous solution which contains 1 part of sodium dodecyl sulfate was continuously added over 4 hours. A crosslinked acrylic rubber polymer (a-1) having an average particle size of 0.16 µm was obtained. A white resin powder was obtained and molded article was prepared therefrom to measure the impact resistance in the same manner as in Example 1 except for using the above crosslinked acrylic rubber polymer. Results are shown in Table 1.

### EXAMPLE 4

A glass reactor equipped with a thermometer, an agitator, a reflux condenser, a nitrogen inlet and a feeder for monomer and emulsifier was charged with 200 parts of distilled water and 0.1 part of sodium dodecyl sulfate. With agitating under nitrogen stream, the temperature of the aqueous solution was increased to 50°C. In the next place, a mixture of 13.43 parts of 2-EHA, 0.07 part of AMA and 0.02 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 71.14 parts of BA, 0.36 part of AMA and 0.09 part of cumene hydroperoxide over 4 hours. Simultaneously, a 5 % aqueous solution which contains 1 part of sodium dodecyl sulfate was continuously added over 4 hours. A crosslinked acrylic rubber polymer (a-1) having an average particle size of 0.16 µm was obtained. A white resin powder was obtained and molded article was prepared therefrom to measure the impact resistance in the same manner as in Example 1 except for using the above crosslinked acrylic rubber polymer. Results are shown in Table 1.

### EXAMPLE 5

A glass reactor equipped with a thermometer, anagitator, a reflux condenser, a nitrogen inlet and a feeder for monomer and emulsifier was charged with 200 parts of distilled water and 0.05 part of sodium dodecyl sulfate. With agitating under nitrogen stream, the temperature of the aqueous solution was increased to 50°C. In the next place, a mixture of 7.19 parts of BA, 1.27 parts of 2-EHA, 0.04 part of AMA and 0.01 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 68.93 parts of BA, 12.16 parts of 2-EHA, 0.41 part of AMA and 0.11 part of cumene hydroperoxide over 4 hours. Simultaneously, a 5 % aqueous solution which contains 1 part of sodium dodecyl sulfate was continuously added over 4 hours. When the addition of monomers was completed, agitation was carried out for 1.5 hours, and a crosslinked acrylic rubber polymer (a-1) having an average particle size of 0.18 µm was obtained in a conversion ratio of 99.6 %. Then, a small amount of the crosslinked acrylic rubber polymer (a-1) was coagulated by salting out with an aqueous solution of calcium chloride and dried. The obtained solid substance was subjected to extraction by using toluene at 23°C for 40 hours, and gel content was measured to be 98.4 %. To the crosslinked acrylic rubber polymer was continuously added a mixture of 10 parts of MMA and 0.01 part of cumene hydroperoxide as the monomer component for graft polymerization (a-2) over an hour at 50°C. After the addition, 0.01 part of cumene hydroperoxide was added and agitation was further continued for two hours to complete the polymerization. The conversion ratio of the monomer component for graft polymerization was 99.1 %. The obtained graft copolymer latex was coagulated by salting out with an aqueous solution of calcium chloride solution, heat-treated, dehydrated and dried to prepare a white resin powder. A molded article was prepared by using the graft copolymer and the impact resistance was measured in the same manner as in Example 1. Results are shown in Table 1.

### EXAMPLE 6

A glass reactor equipped with a thermometer, an agitator, a reflux condenser, a nitrogen inlet and a feeder for monomer and emulsifier was charged with 200 parts of distilled water and 0.1 part of sodium dodecyl sulfate. With agitating under nitrogen stream, the temperature of the aqueous solution was increased to 50°C. In the next place, a mixture of 13.43 parts of 2-EHA, 0.07 part of AMA and 0.02 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 76.12 parts of BA, 0.38 part of AMA and 0.1 part of cumene hydroperoxide over 4 hours. Simultaneously, a 5 % aqueous solution which contains 1 part of sodium dodecyl sulfate was continuously added over 4 hours. A crosslinked acrylic rubber polymer (a-1) having an average particle size of 0.18 µm was obtained. A white resin powder was obtained in the same manner as in Example 5 except for using the above crosslinked acrylic rubber polymer, and molded article was prepared therefrom to measure the impact resistance in the same manner as in Example 1. Results are shown in Table 1.

### COMPARATIVE EXAMPLE 1

A glass reactor equipped with a thermometer, an agitator, a reflux condenser, a nitrogen inlet and a feeder for monomer and emulsifier was charged with 200 parts of distilled water and 0.05 part of sodium dodecyl sulfate. With agitating under nitrogen stream, the temperature of the aqueous solution was increased to 50°C. In the next place, a mixture of 8.46 parts of BA, 0.04 part of AMA and 0.01 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 76.12 parts of BA, 0.38 part of AMA and 0.1 part of cumene hydroperoxide over 4 hours. And simultaneously, a 5 % aqueous solution which contains 1 part of sodium dodecyl sulfate was continuously added over 4 hours. A crosslinked acrylic rubber polymer (a-1) having an average particle size of 0.16 µm was obtained. A white resin powder was obtained and molded article was prepared therefrom to measure the impact resistance in the same manner as in Example 1 except for using the above crosslinked acrylic rubber polymer. Results are shown in Table 2.

### COMPARATIVE EXAMPLE 2

A glass reactor equipped with a thermometer, an agitator, a reflux condenser, a nitrogen inlet and a feeder for monomer and emulsifier was charged with 200 parts of distilled water and 0.05 part of sodium dodecyl sulfate. With agitating under nitrogen stream, the temperature of the aqueous solution was increased to 50°C. In the next place, a mixture of 5.92 parts of BA, 2.54 parts of 2-EHA, 0.04 part of AMA and 0.01 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 53.28 parts of BA, 22.84 parts of 2-EHA, 0.38 part of AMA and 0.1 part of cumene hydroperoxide over 4 hours. Simultaneously, a 5 % aqueous solution which contains 1 part of sodium dodecyl sulfate was continuously added over 4 hours. A crosslinked acrylic rubber polymer (a-1) having an average particle size of 0.16 µm was obtained. A white resin powder was obtained and molded article was prepared therefrom to measure the impact resistance in the same manner as in Example 1 except for using the above crosslinked acrylic rubber polymer. Results are shown in Table 2.

### COMPARATIVE EXAMPLE 3

A glass reactor equipped with a thermometer, an agitator, a reflux condenser, a nitrogen inlet and a feeder for monomer and emulsifier was charged with 200 parts of distilled water and 0.05 part of dodecyl sodium sulfate. With agitating under nitrogen stream, the temperature of the aqueous solution was increased to 50°C. In the next place, a mixture of 3.38 parts of BA, 5.08 parts of 2-EHA, 0.04 part of AMA and 0.01 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 30.45 parts of BA, 45.67 parts of 2-EHA, 0.38 part of AMA and 0.1 part of cumene hydroperoxide over 4 hours. Simultaneously, a 5 % aqueous solution which contains 1 part of sodium dodecyl sulfate was continuously added over 4 hours. A crosslinked acrylic rubber polymer (a-1) having an average particle size of 0.16 µm was obtained. A white resin powder was obtained and molded article was prepared therefrom to measure the impact resistance in the same manner as in Example 1 except for using the above crosslinked acrylic rubber polymer. Results are shown in Table 2.

### COMPARATIVE EXAMPLE 4

A glass reactor equipped with a thermometer, an agitator, a reflux condenser, a nitrogen inlet and a feeder for monomer and emulsifier was charged with 200 parts of distilled water and 0.08 part of dodecyl sodium sulfate. With agitating under nitrogen stream, the temperature of the aqueous solution was increased to 50°C. In the next place, a mixture of 8.46 parts of 2-EHA, 0.04 part of AMA and 0.01 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 76.12 parts of 2-EHA, 0.38 part of AMA and 0.1 part of cumene hydroperoxide over 4 hours. Simultaneously, a 5 % aqueous solution which contains 1 part of sodium dodecyl sulfate was continuously added over 4 hours. A crosslinked acrylic rubber polymer (a-1) having an average particle size of 0.16 µm was obtained. A white resin powder was obtained and molded article was prepared therefrom to measure the impact resistance in the same manner as in Example 1 except for using the above crosslinked acrylic rubber polymer. Results are shown in Table 2.

### COMPARATIVE EXAMPLE 5

A glass reactor equipped with a thermometer, an agitator, a reflux condenser, a nitrogen inlet and a feeder for monomer and emulsifier was charged with 200 parts of distilled water and 0.4 part of dodecyl sodium sulfate. With agitating under nitrogen stream, the temperature of the aqueous solution was increased to 50°C. In the next place, a mixture of 49.75 parts of 2-EHA, 0.25 part of AMA and 0.08 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 34.83 parts of BA, 0.17 part of AMA and 0.05 part of cumene hydroperoxide over 2 hours. And 1 part of dodecyl sodium persulfate in 5 % aqueous solution was continuously added at this same stage over 2 hours. A crosslinked acrylic rubber polymer (a-1) having an average particle size of 0.16 µm was obtained. A white resin powder was obtained and molded article was prepared therefrom to measure the impact resistance in the same manner as in Example 1 except for using the above crosslinked acrylic rubber polymer. Results are shown in Table 2.

### COMPARATIVE EXAMPLE 6

A glass reactor equipped with a thermometer, an agitator, a reflux condenser, a nitrogen inlet and a feeder for monomer and emulsifier was charged with 200 parts of distilled water and 0.05 part of dodecyl sodium sulfate. With agitating under nitrogen stream, the temperature of the aqueous solution was increased to 50°C. In the next place, a mixture of 7.15 parts of BA, 1.26 parts of 2-EHA, 0.09 part of AMA and 0.01 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 64.37 parts of BA, 11.36 parts of 2-EHA, 0.77 part of AMA and 0.1 part of cumene hydroperoxide over 4 hours. Simultaneously, a 5 % aqueous solution which contains 1 part of sodium dodecyl sulfate was continuously added at this same stage over 4 hours. A crosslinked acrylic rubber polymer (a-1) having an average particle size of 0.16 µm was obtained. A white resin powder was obtained and molded article was prepared therefrom to measure the impact resistance in the same manner as in Example 1 except for using the above crosslinked acrylic rubber polymer. Results are shown in Table 2.

### COMPARATIVE EXAMPLE 7

A glass reactor equipped with a thermometer, an agitation, a reflux condenser, a nitrogen inlet and a feeder for monomer and emulsifier was charged with 200 parts of distilled water and 0.05 part of dodecyl sodium sulfate. With agitating under nitrogen stream, the temperature of the aqueous solution was increased to 50°C. In the next place, a mixture of 7.19 parts of BA, 1.27 parts of 2-EHA, 0.04 part of AMA and 0.01 part of cumene hydroperoxide was added. After 10 minutes, a solution obtained by dissolving 0.2 part of formaldehyde sodium sulfoxylate in 5 parts of distilled water and a solution obtained by dissolving 0.01 part of ethylenediaminetetraacetic acid·2 Na salt and 0.005 part of ferrous sulfate heptahydrate in 5 parts of distilled water were added. After agitating for an hour, to the glass reactor was added dropwise a monomer mixture comprising 47.79 parts of BA, 8.43 parts of 2-EHA, 0.28 part of AMA and 0.08 part of cumene hydroperoxide over 3 hours. Simultaneously, a 5 % aqueous solution which contains 1 part of sodium dodecyl sulfate was continuously added at this same stage over 3 hours. When the addition of monomers was completed, agitation was continued for 1.5 hours, and a crosslinked acrylic rubber polymer (a-1) having an average particle size of 0.15 µm was obtained in a conversion ratio of 99.4 %. To the crosslinked acrylic rubber polymer was continuously added a mixture of 32.3 parts of MMA, 2.8 parts of BA and 0.01 part of cumene hydroperoxide as the monomer component for graft polymerization over two hours at 50°C. After the addition, 0.01 part of cumene hydroperoxide was added and agitation was further continued for two hours to complete the polymerization. The obtained graft copolymer latex was coagulated by salting out with an aqueous solution of calcium chloride, heat-treated, dehydrated and dried to prepare a white resin powder. A molded article was prepared by using the graft copolymer and the impact resistance was measured in the same manner as in Example 1. Results are shown in Table 2.

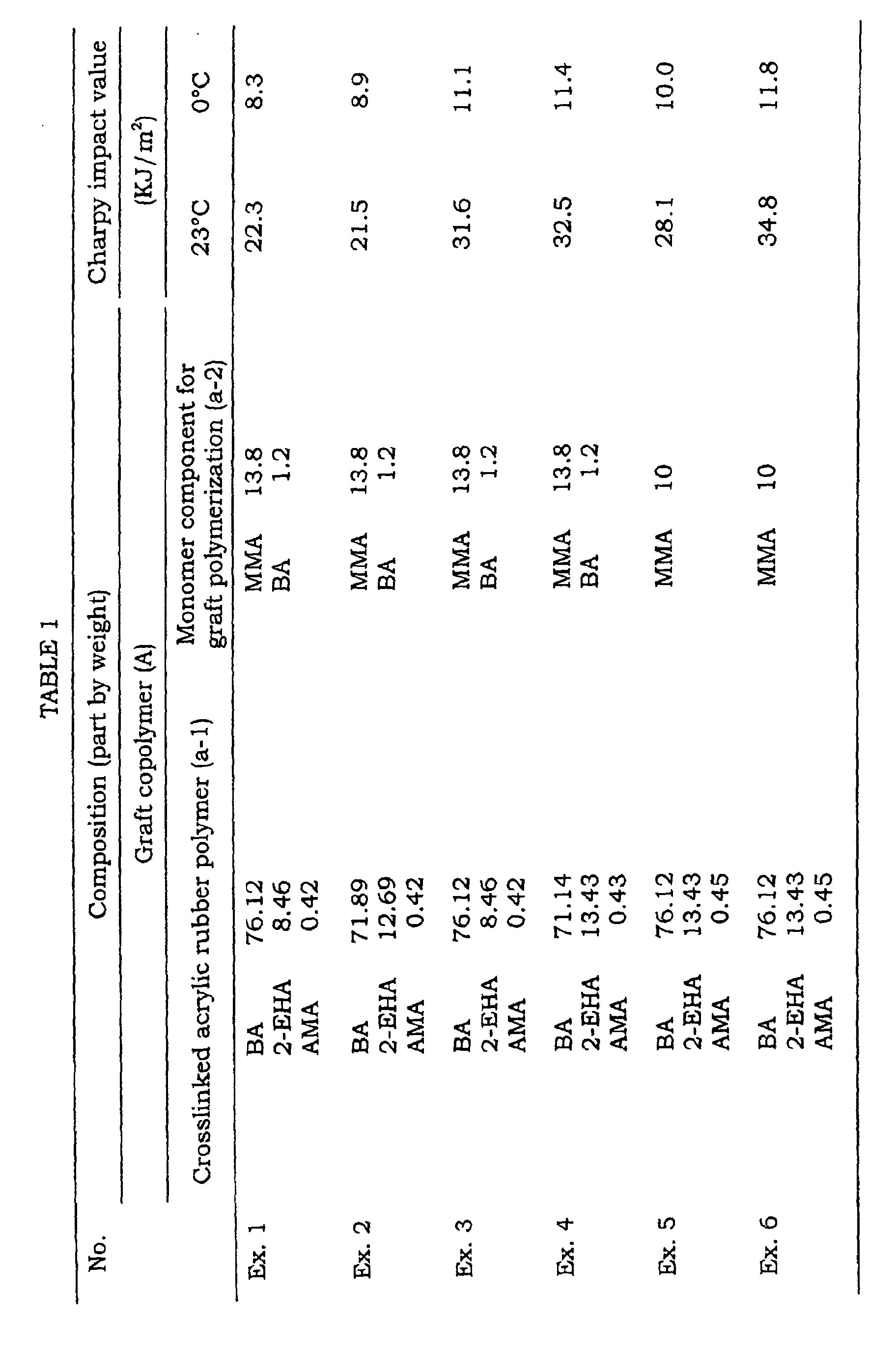

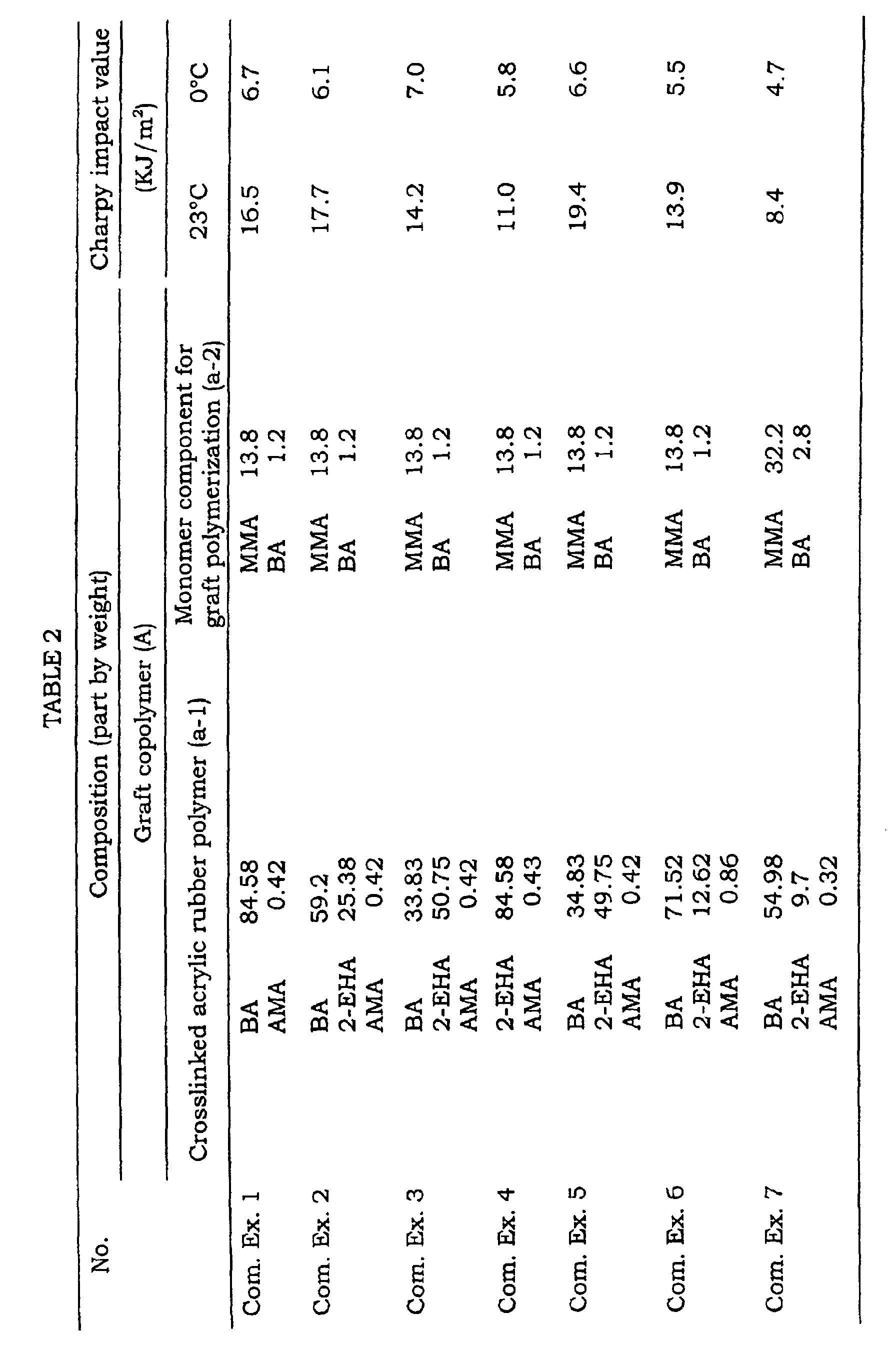

### INDUSTRIAL APPLICABILITY

The vinyl chloride resin composition of the present invention has excellent weatherability and impact resistance, and is suitable for preparing molded articles by extrusion or injection molding, which are used for window frames, pipes, joints, fences, door frames and switch boxes.

## Claims

1. A vinyl chloride resin composition comprising,
(A) 2 to 30 parts by weight of a graft copolymer and
(B) 100 parts by weight of a vinyl chloride resin,
wherein said graft copolymer (A) is obtained by polymerizing, in the presence of
70 to 95 parts by weight of a crosslinked acrylic rubber polymer (a-1) comprising 81 to 95 % by weight of butyl acrylate, 4 to 18 % by weight of an alkyl acrylate having a C₈-₁₂ alkyl group and 0.2 to 0.8 % by weight of a multi-functional monomer,
5 to 30 parts by weight of a monomer component for graft polymerization (a-2) comprising 92 to 100 % by weight of methyl methacrylate, and 0 to 8 % by weight of an alkyl methacrylate having a C₂-₈ alkyl group, an alkyl acrylate having a C₁-₈ alkyl group, an unsaturated nitrile compound or an aromatic vinyl compound,
wherein the total amount of said crosslinked acrylic rubber polymer (a-1) and said monomer component for graft polymerization (a-2) is 100 parts by weight.

2. The vinyl chloride resin composition of Claim 1, wherein said crosslinked acrylic rubber polymer (a-1) contains 81 to 92 % by weight of said butyl acrylate and 7 to 18 % by weight of said alkyl acrylate having a C₈-₁₂ alkyl group.

3. The vinyl chloride resin composition of Claim 1, wherein said alkyl acrylate contained in said crosslinked acrylic rubber polymer (a-1), having a C₈-₁₂ alkyl group is 2-ethylhexyl acrylate.

4. The vinyl chloride resin composition of Claim 1, wherein said graft copolymer (A) comprises,
80 to 95 parts by weight of said crosslinked acrylic rubber polymer (a-1) and
5 to 20 parts by weight of said monomer component for graft polymerization (a-2).

5. The vinyl chloride resin composition of Claim 1, wherein said graft copolymer (A) comprises,
85 to 92 parts by weight of said crosslinked acrylic rubber polymer (a-1) and
8 to 15 parts by weight of said monomer component for graft polymerization (a-2).

6. The vinyl chloride resin composition of Claim 1, wherein 0.4 to 0.6 % by weight of said multi-functional monomer is contained in said crosslinked acrylic rubber polymer (a-1).

7. A molded article comprising the vinyl chloride resin composition of Claim 1.
